# EUROPÄISCHE PATENTSCHRIFT

(11) **EP 1 899 649 B1**
(45) Veröffentlichungstag und Bekanntmachung des Hinweises auf die Patenterteilung: **13.01.2016**
(21) Anmeldenummer: 06764003.7
(22) Anmeldetag: 30.06.2006
(51) Int. Cl.: F23R 3/00, F23M 5/00

(54) **KERAMISCHES BAUTEIL MIT HEISSGASRESISTENTER OBERFLÄCHE UND VERFAHREN ZU SEINER HERSTELLUNG**
CERAMIC ELEMENT WITH HOT GAS RESISTANT SURFACE AND MANUFACTURING METHOD
ELÉMENT EN CÉRAMIQUE AVEC SURFACE RÉSISTANTE AU GAZ CHAUDS ET PROCÉDÉ DE FABRICATION

(30) Priorität: 04.07.2005 EP 05014473
(43) Veröffentlichungstag der Anmeldung: 19.03.2008
(73) Patentinhaber: Siemens Aktiengesellschaft, 80333 München (DE)
(72) Erfinder: GROTE, Holger, 53121 Bonn (DE)
(86) Internationale Anmeldenummer: PCT/EP2006/063754
(87) Internationale Veröffentlichungsnummer: WO 2007/003605

(56) Entgegenhaltungen:
- WO-A-2004/079284
- US-A- 5 236 151
- US-A- 5 851 679
- US-A1- 2005 112 381
- US-B1- 6 210 791
- US-B1- 6 759 151
- US-B1- 6 875 529

## Beschreibung

Die vorliegende Erfindung betrifft ein keramisches Bauteil mit heißgasresistenter Oberfläche sowie ein Verfahren zu seiner Herstellung. Daneben betrifft die vorliegende Erfindung einen Flammraum, insbesondere eine Gasturbinenbrennkammer.

Die Wände von heißgasführenden Flammenräumen wie etwa den Brennkammern von Gasturbinenanlagen erfordern eine thermische Abschirmung der tragenden Wandstruktur gegen einen Angriff des geführten Heißgases. Die thermische Abschirmung kann beispielsweise durch eine der eigentlichen Wandstruktur vorgelagerte Heißgasauskleidung in Form eines keramischen Hitzeschildes realisiert werden. Keramische Materialien bieten sich für den Aufbau eines derartigen Hitzeschildes im Vergleich zu metallischen Werkstoffen aufgrund ihrer hohen Temperaturbeständigkeit, Korrosionsbeständigkeit und ihrer niedrigen Wärmeleitfähigkeit idealerweise an. Der Hitzeschild ist in der Regel aus einer Anzahl von keramischen Hitzeschildelementen aufgebaut, mit denen der Flammraum flächig ausgekleidet ist. Ein solcher keramischer Hitzeschild ist beispielsweise in der EP 0 558 540 B1 beschrieben.

Beim Betrieb eines Flammraums und insbesondere beim Betrieb von Gasturbinenbrennkammern ist der Hitzeschild extremen Belastungen ausgesetzt. Neben thermischen und mechanischen Belastungen sind die Hitzeschildelemente auch stark korrosiven Belastungen aufgrund des strömenden Heißgases ausgesetzt. Durch die korrosiven Belastungen kann es zu einem die Lebensdauer vermindernden Materialverlust am Hitzeschildelement kommen. Dieser Materialverlust ist auf eine Kombination aus Korrosion, anschließendes Nachsintern der Oberfläche und erosiver Belastung aufgrund des hohen Massendurchsatzes an strömendem Heißgas zurückzuführen. In Gasturbinenbrennkammern ist der Materialverlust an der Oberfläche von keramischen Hitzeschildelementen insbesondere im Übergangsbereich von der Brennkammer zur Turbine groß.

Die US 6 759 151 A offenbart ein aus mehreren Schichten aufgebautes, Keramik umfassendes Bauteil. Die äußerste Schicht hat einen geringen thermischen Ausdehnungskoeffizienten und kann eine Zirkon aufweisende Oxidbeschichtung sein.

Die WO 2004/079284 A1 beschreibt feuerfeste Steine zur Herstellung eines feuerfesten Mauerwerks für Öfen. Die Steine können Spinell, Korund oder Mullit umfassen.

Aufgabe der vorliegenden Erfindung ist es daher, ein vorteilhaftes keramisches Bauteil zur Verwendung in einem Flammraum, insbesondere in einer Gasturbinenbrennkammer, zur Verfügung zu stellen. Es ist eine weitere Aufgabe der vorliegenden Erfindung, einen Flammraum mit einem verbesserten Hitzeschild zur Verfügung zu stellen. Schließlich ist es eine Aufgabe der vorliegenden Erfindung, ein Verfahren zum Herstellen eines vorteilhaften keramischen Bauteils zur,Verfügung zu stellen.

Die erste Aufgabe wird durch ein keramisches Bauteil nach Anspruch 1, die zweite Aufgabe durch einen Flammraum nach Anspruch 6 und die dritte Aufgabe durch ein Verfahren nach Anspruch 7 gelöst. Die abhängigen Ansprüche enthalten vorteilhafte Ausgestaltungen der Erfindung.

Ein erfindungsgemäßes keramisches Bauteil weist einen Keramikkörper sowie eine heißgasresistente Oberfläche auf. Der Keramikkörper kann bspw. aus einem bis zu 50 Gew.-% Mullit (3Al₂O₃ x 2SiO₂ oder 2Al₂O₃ x SiO₂) und mehr als 50 Gew.-% Korund (Al₂O₃) umfassenden Basismaterial hergestellt sein. Zudem kann das Basismaterial geringe Mengen an Glasphase (SiO₂), d.h. mit einem Anteil von maximal 5 Masse-%, enthalten. Im erfindungsgemäßen keramischen Bauteil ist die heißgasresistente Oberfläche mit einer reaktionsarmen mineralischen Beschichtung versehen, die Spinell (MgAl₂O₄) als ein wesentliches beschichtungsmaterial enthält. Besonders vorteilhaft ist es hierbei, wenn die Beschichtung wenigstens 90 Masse-Prozent des wesentlichen Beschichtungsmaterials Spinell enthält. Zur Stabilisierung der Beschichtung und/oder zur Erhöhung ihrer Temperaturstabilität kann sie eine geeignete Dotierung, bspw. Elemente der Lanthanide oder Titan, enthalten.

Aufgrund der reaktionsarmen mineralischen Beschichtung lassen sich chemische Reaktionen, welche die Anfälligkeit des Keramikmaterials für Erosion erhöhen, wirksam unterdrücken. Der Materialverlust bei Beaufschlagung mit strömendem Heißgas ist in keramischen Bauteilen, welche aus einem Mullit und Korund umfassenden Basismaterial aufgebaut sind, auf die folgenden zwei Reaktionen zurückzuführen: 1. Mullitabbau, 2. Kornwachstum und Nachsinterung.

Im strömenden Heißgas üblicherweise vorhandener Wasserdampf führt dazu, dass SiO₂ im Mullit des Basismaterials als SiOₓ in die Gasphase entweichen kann, was zum Abbau von Mullit führt. Das Al₂O₃ aus dem Mullit bleibt in der Beschichtung zurück und bildet dort feine Korundkörner, den sog. sekundären Korund. Die Körner aus sekundärem Korund zeigen Kornwachstum und Versinterung. Kornwachstum und Versinterung nehmen mit der Betriebsdauer, d.h. mit Zunahme der Zeitdauer, über die das keramische Bauteil dem strömenden Heißgas ausgesetzt ist, zu. Diese Prozesse führen daher mit zunehmender Betriebsdauer zu einer Schwächung der Oberfläche, etwa durch Mikrorissbildung. Die Schwächung der Oberfläche hat zur Folge, dass durch das strömende Heißgas Oberflächenpartikel - oder gar ganze Oberflächenbereiche - des keramischen Bauteils abgetragen werden. Sobald eine gewisse Menge an Oberflächenmaterial abgetragen bzw. erodiert ist, müssen die entsprechenden keramischen Bauteile ausgetauscht werden, da ihre Funktionstüchtigkeit nicht länger gewährleistet werden kann.

Durch das Versiegeln der Oberfläche mit der reaktionsarmen mineralischen Beschichtung (EBC Environmental Barrier Coating) kann insbesondere die Korrosion SiO₂-haltiger Phasen des Basismaterials an der Oberfläche des Bauteils beim Beaufschlagen der Oberfläche mit Heißgas wirksam unterdrückt werden. Dadurch wird die Oberfläche weniger anfällig für Erosion. Besonders effektiv kann das Nachsintern durch die erfindungsgemäße auf Spinell basierende Beschichtung unterdrückt werden. Mit der auf Spinell basierenden Beschichtung lässt sich daher die Lebensdauer des keramischen Bauteils weiter erhöhen. Die auf Spinell basierende Beschichtung behält ihre grundsätzlichen Materialeigenschaften, beispielsweise eine hohe Beständigkeit gegenüber Temperaturwechsel, auch bei längerem Heißgasangriff und hohen Temperaturen bei.

Besonders vorteilhaft sind die Materialeigenschaften der Beschichtung, wenn der Anteil des Materials, auf dem die Beschichtung basiert, wenigstens 90 Masse-Prozent beträgt und der Glasanteil unter 2 Masse-Prozent liegt. Vorzugsweise ist gar kein Glas im Beschichtungsmaterial vorhanden.

Ein erfindungsgemäßer Flammraum, der insbesondere als Gasturbinenbrennkammer ausgestaltet sein kann, weist eine Wandstruktur und einen an der Wandstruktur zum Inneren des Flammraums hin vorgelagerten keramischen Hitzeschild auf. Der keramische Hitzeschild ist aus einer Anzahl von erfindungsgemäßen keramischen Bauteilen, d.h. aus einer Anzahl von keramischen Hitzeschildelementen, aufgebaut.

Bei dem erfindungsgemäßen Flammraum können aufgrund der erhöhten Resistenz des Hitzeschildes gegenüber Erosion die Wartungsintervalle verlängert und die Austauschraten von Hitzeschildelementen verringert werden.

Im erfindungsgemäßen Verfahren zum Herstellen eines keramischen Bauteils mit heißgasresistenter Oberfläche wird auf die heißgasresistente Oberfläche eine reaktionsarme mineralische Beschichtung aufgebracht. Als Beschichtungen kommt eine auf Spinell basierende Beschichtung zum Einsatz.

Wie bereits zuvor mit Bezug auf das erfindungsgemäße keramische Bauteil beschrieben, erhöht die reaktionsarme Beschichtung die Widerstandsfähigkeit eines mit ihr ausgestatteten keramischen Bauteils. Für die im erfindungsgemäßen Verfahren zur Anwendung kommende reaktionsarme mineralische Beschichtung gilt das mit Bezug auf die reaktionsarme mineralische Beschichtung des erfindungsgemäßen keramischen Bauteils gesagte analog.

Die reaktionsarme mineralische Beschichtung kann sowohl auf ein gesintertes keramisches Bauteil aufgebracht werden als auch auf ein ungesintertes keramisches Bauteil, einen sogenannten Grünling. In beiden Fällen erfolgt zum Beschichten ein Aufbringen einer Materialzusammensetzung und ein anschließendes Sintern. Wenn die Beschichtung auf einen Grünling aufgebracht wird, kann dieser Sinterprozess zusammen mit dem Sintern des Grünlings erfolgen. Es ist also möglich, die reaktionsarme mineralische Beschichtung auf ein bereits bestehendes keramisches Bauteil, welches bereits eine gewisse Betriebsdauer hinter sich hat, aufzubringen. Auf diese Weise kann etwa eine keramische Flammraumauskleidung mit der reaktionsarmen mineralischen Beschichtung nachgerüstet werden. Die Beschichtung kann aber auch bei der Neuherstellung eines keramischen Bauteils aufgebracht werden.

Das Aufbringen der Materialzusammensetzung auf die Bauteiloberfläche kann auf vielfältige Weise erfolgen, beispielsweise durch Pinseln, Spritzen, etwa Plasmaspritzen oder Flammenspritzen, Spachteln, Tauchen, durch physikalische Abscheidung aus der Gasphase, etc. Vorzugsweise erfolgt das Aufbringen jedoch durch Aufsprühen oder Aufschleudern.

Der Materialzusammensetzung, die auf die zu beschichtende Oberfläche aufgebracht wird, können neben Korund weitere Bestandteile hinzugefügt werden, beispielsweise Magnesiumoxid (MgO). Insbesondere wenn die Zusammensetzung einen Anteil von mindestens 60 Masse-Prozent Korund und einen Anteil von höchstens 40 Masse-Prozent Magnesiumoxid aufweist, führt der anschließende Sinterprozess zu einer auf Spinell basierenden Beschichtung.

Die Materialzusammensetzung für die Beschichtung kann zudem weitere Bestandteile wie etwa Zirkonia aufweisen. Weitere Merkmale, Eigenschaften und Vorteile der vorliegenden Erfindung ergeben sich aus der nachfolgenden Beschreibung eines Ausführungsbeispiels unter Bezugnahme auf die beiliegenden Figuren.

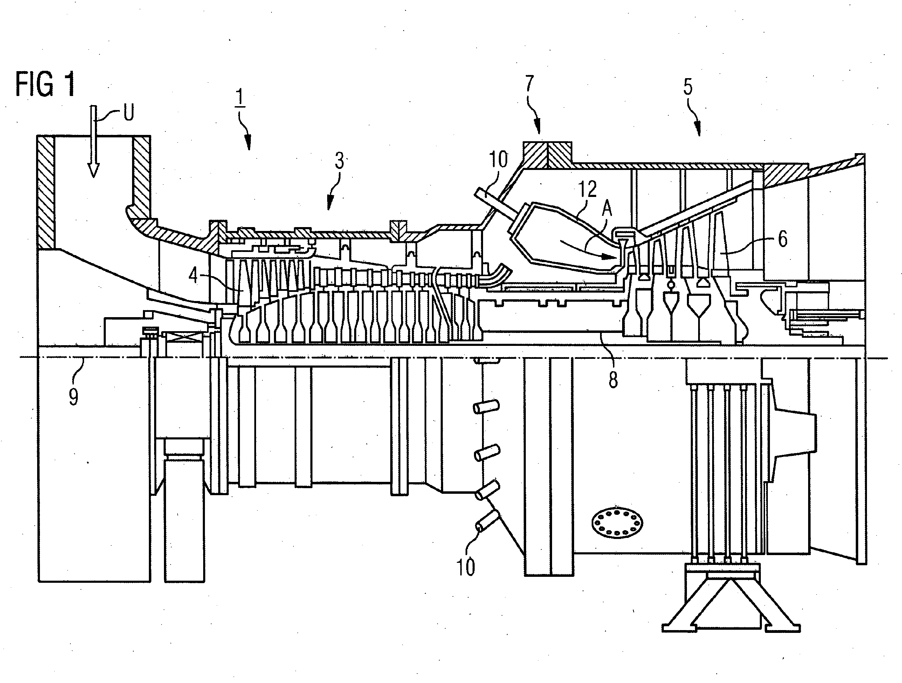

- Figur 1: zeigt eine Gasturbinenanlage in einer teilweise geschnittenen Seitenansicht.
- Figur 2: zeigt einen an einer Flammraumwand angeordneten keramischen Hitzeschild.
- Figur 3: zeigt ein erfindungsgemäßes keramisches Bauteil in einer geschnittenen Seitenansicht.

Nachfolgend wird die Erfindung anhand eines keramischen Hitzeschildelementes zum Aufbau eines keramischen Hitzeschildes an der Wand einer Gasturbinenbrennkammer beschrieben.

Eine Gasturbinenanlage 1 umfasst einen Verdichterabschnitt 3, einen Turbinenabschnitt und einen Brennerabschnitt 7. Im Verdichterabschnitt 3 und im Turbinenabschnitt 5 sind Verdichterlaufschaufeln 4 bzw. Turbinenlaufschaufeln 6 auf einer gemeinsamen Welle 8 angeordnet, die auch Turbinenläufer genannt wird. Der Turbinenläufer 8 ist um eine zentrale Achse 9 drehbar gelagert.

Der Brennerabschnitt umfasst eine Anzahl Brenner 10, die in eine Brennkammer 12 münden, welche wiederum in den Turbinenabschnitt 5 mündet. Die Brennkammer 12 ist im vorliegenden Ausführungsbeispiel als Ringbrennkammer ausgebildet, d.h. sie erstreckt sich ringförmig um den Turbinenläufer herum, und ist mit einem keramischen Hitzeschild ausgekleidet.

Im Betrieb der Gasturbinenanlage 1 wird über den Verdichter Umgebungsluft U eingesaugt, auf einen höheren Druck verdichtet und in den Brennerabschnitt 7 als sogenannte Verdichterluft ausgegeben. Im Brennerabschnitt 7 tritt die Verdichterluft in den Brenner 10 ein und wird mit einem dem Brenner 10 zugeführten Brennstoff vermischt und in der Brennkammer 12 verbrannt. Die dabei entstehenden Verbrennungsabgase bilden ein Arbeitsmedium A, welches durch die Brennkammer zum Turbinenabschnitt 5 strömt und im Turbinenabschnitt unter Entspannung und Abkühlung Impuls auf die Laufschaufeln 6 überträgt. Die Geometrie der Laufschaufeln sorgt dabei dafür, dass der Impuls den Turbinenläufer 8 in Rotation versetzt. Der rotierende Turbinenläufer 8 treibt einerseits den Verdichter an und ist zudem mit einem Verbraucher (nicht dargestellt) gekoppelt, beispielsweise einem elektrischen Generator zum Erzeugen von Strom.

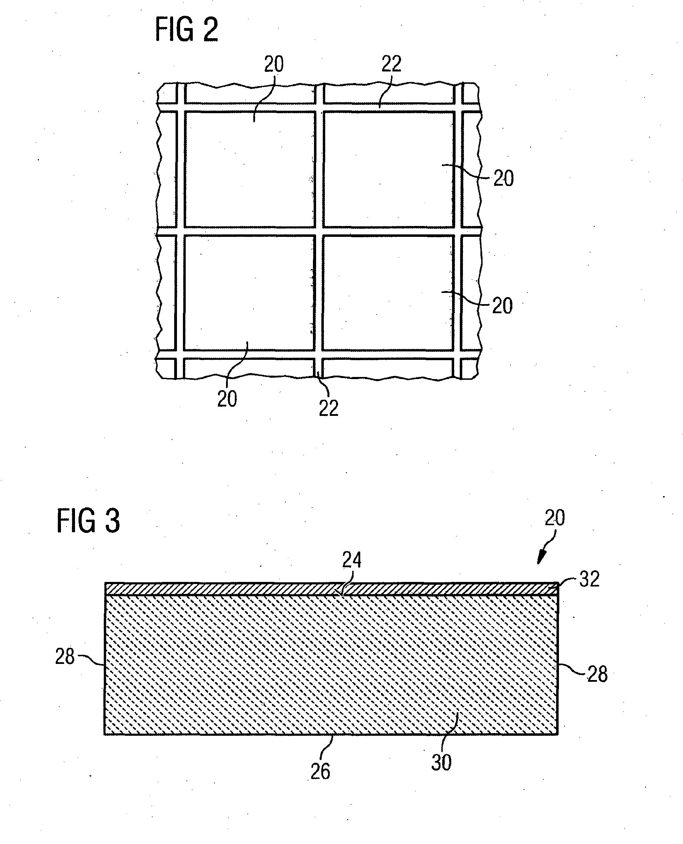

Ein Ausschnitt aus der Brennkammerwand ist in Figur 2 dargestellt. Die Figur zeigt eine Draufsicht auf die Brennkammerwand vom Inneren der Brennkammer aus gesehen. Die Brennkammerwand ist mit einem keramischen Hitzeschild versehen, welcher aus einer Anzahl von keramischen Hitzeschildelementen 20 aufgebaut ist. Die Hitzeschildelemente 20 sind flächendeckend an der eigentlichen Brennkammerwand derart angeordnet, dass sie ihr zum Brennkammerinneren hin vorgelagert sind. Zwischen benachbarten Hitzeschildelementen 20 sind Spalte 22 vorhanden, um bei Kontakt mit dem strömenden Heißgas eine Ausdehnung der einzelnen Hitzeschildelemente zu ermöglichen, ohne dass diese aneinander stoßen.

Ein keramisches Hitzeschildelement 20 ist in Figur 3 in einer geschnittenen Seitenansicht schematisch dargestellt. Das Hitzeschildelement 20 umfasst eine Heißseite 24, welche dem strömenden Heißgas zugewandt ist, wenn das Hitzeschildelement 20 in einen Hitzeschild eingebaut ist und die eine heißgasresistente Oberfläche des Hitzeschildelementes 20 darstellt. Der Heißgasseite 24 gegenüberliegend, weist das Hitzeschildelement 20 eine Kaltseite auf, welche der tragenden Wandstruktur der Brennkammer 12 zugewandt ist, wenn das Hitzeschildelement in einen Hitzeschild eingebaut ist. Zwischen der Heißseite 24 und der Kaltseite 26 erstrecken sich Umfangsseiten 28.

Der Keramikkörper 30 des Hitzeschildelementes 20 ist aus einem Basismaterial aufgebaut, welches ca. 10 Masse-% bis ca. 50 Masse-% Mullit (3Al₂O₃ x 2SiO₂ oder 2Al₂O₃ x SiO₂) und ca. 50 Masse-% bis ca. 90 Masse-% Korund (Al₂O₃) sowie maximal 5 Masse-% Glasphase (SiO₂) umfasst. Ein derartiger Körper kann beispielsweise hergestellt werden, indem eine Formmasse, welche Al₂O₃ und SiO₂ in Pulverform umfasst, in Form gepresst oder gegossen und anschließend gesintert wird.

Die Formmasse kann beispielsweise einen Anteil von 80 Masse-% oder mehr Al₂O₃ und 20 Masse-% oder weniger SiO₂ umfassen. Beim Sintern entsteht daraus eine Keramik, welche einen Mullitanteil bis ca. 50 Masse-% und einen Korundanteil über ca. 50 Masse-% enthält. Statt Al₂O₃ und SiO₂ in Pulverform kann die Masse auch bereits Korund und Mullit in Pulverform umfassen. Zudem kann die Formmasse auch einen Zusatz, beispielsweise Zirkonoxid (ZrO₂) im Bereich bis ca. 30 Masse-Prozent enthalten.

Die durch die Brennkammer 12 strömenden heißen Verbrennungsabgase enthalten eine gewisse Menge an Wasserdampf. Dieser Wasserdampf kann zum Abbau von Mullit und Glasphase führen, wenn diese den heißen Abgasen direkt ausgesetzt sind. Um den Abbau von Mullit und Glasphase zu unterbinden, ist die Heißseite 24 des Hitzeschildelementes 20 mit einer reaktionsarmen mineralischen Beschichtung 32 versehen. Erfindungsgemäß umfasst diese Beschichtung 32 als Hauptbestandteil Spinell, also MgAl₂O₄, als Hauptbestandteil. Ihre Dicke beträgt weniger als 1 mm, vorzugsweise weniger als 0,5 mm.

Diese reaktionsarme mineralische Beschichtung schränkt das Nachsintern im Bereich der Heißgasseite 24 ein. Der eingangs mit Bezug auf den Stand der Technik beschriebene Materialabtrag kann daher mittels der Beschichtung wirkungsvoll reduziert werden. Der Einsatz von Spinell als Hauptbestandteil der Beschichtung führt auch dazu, dass die grundsätzlichen Materialeigenschaften wie etwa die Beständigkeit gegenüber Temperaturwechseln, auch bei längerem Heißgasangriff beibehalten werden. Insgesamt lässt sich so die Lebensdauer des Hitzeschildelementes 20 verlängern.

Zum Herstellen der Beschichtung auf Spinell-Basis wird auf die Oberfläche eines herzustellenden, bereits gepressten Hitzeschildelementes vor dem Sintern, den sog. Grünling, eine Materialzusammensetzung aufgetragen, welche Al₂O₂ mit einem Anteil von über 60 Masse-% und Magnesiumoxid (MgO) mit einem Masseanteil bis 40 Masse-% enthält. Wenn anschließend ein Sintern mit Temperaturen bis maximal ca. 1650° C erfolgt, wandelt sich die Beschichtungsmasse in einen Beschichtung auf Spinell-Basis um, in welcher der Masseanteil an Spinell über 90 Masse-% liegt.

Vorzugsweise enthält die Materialzusammensetzung für die Beschichtung sehr wenig bis gar kein Siliziumoxid. Unter sehr wenig Siliziumoxid soll hierbei ein Anteil von nicht mehr als 2 Masse-% angesehen werden.

In einer Abwandlung des Herstellungsverfahrens für das erfindungsgemäße keramische Hitzeschildelement wird die Beschichtungsmasse auf einen bereits gesinterten Keramikkörper aufgebracht. In einem weiteren Sinterprozess mit Temperaturen bis maximal ca. 1650° C wird dann die Masse in die Beschichtung auf Spinell-Basis umgewandelt. Auf die Weise lassen sich insbesondere auch bereits im Einsatz befindliche keramische Hitzeschildelemente mit der reaktionsarmen mineralischen Beschichtung nachrüsten.

Alternativ zur Herstellung der auf Spinell basierenden Beschichtung unter Verwendung der Al₂O₂ und MgO enthaltenden Beschichtungsmasse kann das Herstellen der Beschichtung auch durch Aufbringen einer Spinell enthaltenden Suspension auf den Grünling oder den bereits gesinterten Keramikkörper und ein anschließendes Sintern erfolgen.

Zum Aufbringen der Beschichtungsmasse oder der Suspension auf die Oberfläche des gepressten oder des bereits gebrannten Keramikkörpers können alle Verfahren zur Anwendung kommen, mit denen sich Beschichtungsmassen oder Suspensionen auf Oberflächen aufbringen lassen. Insbesondere kann die Beschichtungsmasse oder die Suspension durch Aufschleudern, Aufsprühen oder Aufspritzen aufgebracht werden. Geeignete sind bspw. auch thermische Spritzverfahren wie etwa Plasmaspritzen oder Flammspritzen.

## Patentansprüche

1. Keramisches Bauteil (20), welches einen Keramikkörper (30) sowie eine heißgasresistente Oberfläche (24) aufweist, welche mit einer reaktionsarmen mineralischen Beschichtung (32) versehen ist,
**dadurch gekennzeichnet**,
die Beschichtung (32) auf Spinell basiert.

2. Keramisches Bauteil (20) nach Anspruch 1,
**dadurch gekennzeichnet, dass** die Beschichtung (32) wenigstens 90 Masse-% Spinell enthält.

3. Keramisches Bauteil (20) nach Anspruch 1 oder Anspruch 2,
**dadurch gekennzeichnet, dass** die Beschichtung (32) höchstens 2% Siliziumdioxid enthält.

4. Keramisches Bauteil (20) nach einem der Ansprüche 1 bis 3,
**dadurch gekennzeichnet, dass** die Beschichtung (32) eine Dotierung enthält.

5. Keramisches Bauteil (20) nach Anspruch 4,
**dadurch gekennzeichnet, dass** die Beschichtung (32) eine Dotierung mit Elementen des Lanthaniden oder Titan enthält

6. Flammraum, insbesondere Gasturbinenbrennkammer (12), mit einer Wandstruktur und einem an der Wandstruktur zum Inneren des Flammraums hin vorgelagerten keramischen Hitzeschild, **dadurch gekennzeichnet, dass** der keramische Hitzeschild aus einer Anzahl von keramischen Bauteilen (20) nach einem der vorangehenden Ansprüche aufgebaut ist.

7. Verfahren zum Herstellen eines keramischen Bauteils (20) mit heißgasresistenter Oberfläche, in dem eine reaktionsarme mineralische Beschichtung (32) auf wenigstens eine Oberfläche (24) des keramischen Bauteils (20) aufgebracht wird,
**dadurch gekennzeichnet, dass**
als reaktionsarme Beschichtung (32) eine auf Spinell basierende Beschichtung zum Einsatz kommt.

8. Verfahren nach Anspruch 7,
durch gekennzeichnet, dass die Beschichtung (32) auf ein gesintertes keramisches Bauteil (20) aufgebracht wird.

9. Verfahren nach Anspruch 7,
durch gekennzeichnet, dass die Beschichtung (32) auf ein ungesintertes keramisches Bauteil (20) aufgebracht wird und nach dem Aufbringen der Beschichtung ein Sintern des keramischen Bauteils (20) erfolgt.

10. Verfahren nach einem der Ansprüche 7 bis 9,
**dadurch gekennzeichnet, dass** zum Beschichten eine Materialzusammensetzung auf die zu beschichtende Oberfläche (24) des keramischen Bauteils (20) aufgebracht wird, die Al₂O₃ umfasst.

11. Verfahren nach Anspruch 10,
**dadurch gekennzeichnet, dass** eine Materialzusammensetzung auf die zu beschichtende Oberfläche (24) des keramischen Bauteils (20) aufgebracht wird, die Al₂O₃ und MgO umfasst.

12. Verfahren nach Anspruch 11,
**dadurch gekennzeichnet, dass** der Anteil an Al₂O₃ mindestens 60 Masse-% und der Anteil an MgO höchstens 40 Masse-% beträgt.

13. Verfahren nach einem der Ansprüche 7 bis 9,
**dadurch gekennzeichnet, dass** eine Materialzusammensetzung auf die zu beschichtende Oberfläche (24) des keramischen Bauteils (20) aufgebracht wird, die Spinell umfasst.

14. Verfahren nach einem der Ansprüche 7 bis 13,
**dadurch gekennzeichnet, dass** die Materialzusammensetzung mittels eines Schleuderverfahrens, eines Sprühverfahrens oder eines Spritzverfahrens aufgebracht wird.

## Claims

1. Ceramic component (20) which features a ceramic body (30) as well as a surface resistant to hot gas (24) which (32) is provided with a poorly reactive mineral coating (32),
**characterised in that**,
the coating (32) is based on spinel.

2. Ceramic component (20) according to claim 1,
**characterised in that** the coating (32) contains at least 90% by mass spinel.

3. Ceramic component (20) according to claim 1 or claim 2,
**characterised in that** the coating (32) contains at most 2% by mass silicon dioxide.

4. Ceramic component (20) according to one of the claims 1 to 3,
**characterised in that** the coating (32) contains a doping.

5. Ceramic component (20) according to claim 4,
**characterised in that** the coating (32) contains a doping with elements of the lanthanides or titanium.

6. Combustion space, especially a gas turbine combustion chamber (12), with a wall structure and a ceramic heat shield located on the front of the wall structure towards the inside of the combustion space, **characterised in that** the ceramic heat shield is constructed from a number of ceramic components (20) according to one of the previous claims.

7. Method for producing a ceramic component (20) with a surface resistant to hot gas, in which a poorly reactive mineral coating (32) is applied to at least one surface (24) of the ceramic component (20), **characterised in that** a coating based on spinel is used as the poorly reactive mineral coating (32).

8. Method according to claim 7,
**characterised in that** the coating (32) is applied to a sintered ceramic component (20).

9. Method according to claim 7,
**characterised in that** the coating (32) is applied to an unsintered ceramic component (20) and that the ceramic component (20) is sintered after the application of the coating.

10. Method according to one of the claims 7 to 9,
**characterised in that**, for coating, a material compound which comprises Al₂O₃ is applied to the surface (24) of the ceramic component (20) to be coated.

11. Method according to claim 10,
**characterised in that** a material compound which comprises Al₂O₃ and MgO is applied to the surface (24) of the ceramic component (20) to be coated.

12. Method according to claim 11,
**characterised in that** the proportion of Al₂O₃ amounts to at least 60% by mass and the proportion of MgO to at most 40% by mass.

13. Method according to one of the claims 7 to 9,
**characterised in that** a material compound which comprises spinel is applied to the surface (24) of the ceramic component (20) to be coated.

14. Method according to one of the claims 7 to 13,
**characterised in that** the material compound is applied by means of a spin coating method, a spray method or an injection method.

## Revendications

1. Pièce (20) en céramique qui a un corps (30) en céramique ainsi qu'une surface (24) résistante au gaz chaud, laquelle est pourvue d'un revêtement (32) minéral peu réactif,
**caractérisée**
**en ce que** le revêtement (32) est à base de spinelle.

2. Pièce (20) en céramique suivant la revendication 1,
**caractérisée en ce que** le revêtement (32) contient au moins 90 % en masse de spinelle.

3. Pièce (20) en céramique suivant la revendication 1 ou revendication 2,
**caractérisée en ce que** le revêtement (32) contient au plus 2 % de dioxyde de silicium.

4. Pièce (20) en céramique suivant l'une des revendications 1 à 3,
**caractérisée en ce que** le revêtement (32) contient un dopage.

5. Pièce (20) en céramique suivant la revendication 4,
**caractérisée en ce que** le revêtement (32) contient un dopage par des éléments des lanthanides ou par du titane.

6. Foyer, notamment chambre de combustion (12) de turbine à gaz, ayant une structure de paroi et un bouclier thermique en céramique posé devant en direction de l'intérieur du foyer, **caractérisé en ce que** le bouclier thermique en céramique est formé d'un certain nombre de pièces (20) en céramique suivant l'une des revendications précédentes.

7. Procédé de fabrication d'une pièce (20) en céramique ayant une surface résistante au gaz chaud, dans lequel on dépose un revêtement (32) minéral peu réactif sur au moins une surface (24) de la pièce (20),
**caractérisé en ce que** l'on utilise comme revêtement (32) peu réactif un revêtement à base de spinelle.

8. Procédé suivant la revendication 7,
**caractérisé en ce que** l'on dépose le revêtement (32) sur une pièce (20) en céramique frittée.

9. Procédé suivant la revendication 7,
**caractérisé en ce que** l'on dépose le revêtement (32) sur une pièce (20) en céramique frittée et, après le dépôt du revêtement, on effectue un frittage de la pièce (20) en céramique.

10. Procédé suivant l'une des revendications 7 à 9,
**caractérisé en ce que**, pour le revêtement, on dépose sur la surface (24) à revêtir de la pièce (20) en céramique une composition de matière qui comprend de l'Al₂O₃.

11. Procédé suivant la revendication 10,
**caractérisé en ce que** l'on dépose sur la surface (24) à revêtir de la pièce (20) en céramique une composition de matière qui comprend de l'Al₂O₃ et du MgO.

12. Procédé suivant la revendication 11,
**caractérisé en ce que** la proportion en Al₂O₃ est d'au moins 60 % en masse et la proportion en MgO d'au plus 40 % en masse.

13. Procédé suivant l'une des revendications 7 à 9,
**caractérisé en ce que** l'on dépose sur la surface (24) revêtir de la pièce (20) en céramique une composition de matière qui comprend du spinelle.

14. Procédé suivant l'une des revendications 7 à 13,
**caractérisé en ce que** l'on dépose la composition de matière à l'aide d'un procédé par centrifugation, d'un procédé par pulvérisation ou d'un procédé par projection.
